# FASCICULE DE BREVET EUROPEEN

(11) **EP 0 537 071 B1**
(45) Date de publication et mention de la délivrance du brevet: **20.03.1996**
(21) Numéro de dépôt: 92402744.4
(22) Date de dépôt: 08.10.1992
(51) Int. Cl.: G21F 9/28, G21C 19/32

(54) **Procédé de conditionnement ou de recyclage de cartouches ioniques usagées**
Verfahren zur Konditionierung oder Wiederaufbereitung von gebrauchten ionischen Kartuschen
Process for conditioning or recycling used ionic cartridges

(30) Priorité: 10.10.1991 FR 9112476
(43) Date de publication de la demande: 14.04.1993
(73) Titulaire: COGEMA (COMPAGNIE GENERALE DES MATIERES NUCLEAIRES), F-78141 Velizy-Villacoublay Cédex (FR)
(72) Inventeur: Duquesne, Jacques, F-50100 Cherbourg (FR)
(74) Mandataire: Dubois-Chabert, Guy

(56) Documents cités:
- EP-A- 0 036 999
- EP-A- 0 102 048
- EP-A- 0 248 286
- Derwent Publications Ltd., London, GB; AN 86-044480 & JP-A-60 205 294

## Description

La présente invention concerne un procédé pour conditionner ou pour recycler des cartouches ioniques permettant le traitement des eaux contaminées des piscines de stockage des combustibles irradiés provenant des réacteurs nucléaires.

Cette invention s'applique de façon particulière au domaine nucléaire. En effet, les combustibles des réacteurs nucléaires sont stockés dans des piscines dont les eaux doivent être maintenues pures chimiquement. Ce rôle de maintien de pureté est tenu par des échangeurs ioniques, nommés aussi "Nymphéas" ioniques. Ces Nymphéas comportent deux cartouches cylindriques superposées, chaque cartouche comportant une structure métallique remplie de résines échangeuses d'ions. Lorsque ces cartouches Nymphéas (que l'on appellera simplement cartouches, dans la suite de la description) sont usées, elles sont stockées provisoirement dans une piscine de stockage, en attendant leur conditionnement définitif.

Un conditionnement possible de ces cartouches, effectué dans un atelier spécifique, consiste à injecter de la résine thermodurcissable sous forme liquide dans la cartouche, la calandre de celle-ci formant l'enveloppe finale du déchet. Pour des raisons économiques, coûts d'investissement et d'exploitation très élevés, ce procédé est difficilement exploitable.

La présente invention permet justement de remédier à ce problème de coût en proposant deux procédés respectivement de conditionnement et de recyclage dans lesquels les résines sont extraites de la cartouche afin de permettre le conditionnement ou le recyclage de la cartouche vide séparément du conditionnement des résines. Ainsi, une fois les résines extraites, la structure métallique interne de la cartouche est rincée puis, dans le cas du conditionnement, la cartouche vide décontaminée est introduite dans un caisson métallique qui sera bétonné avant stockage ou, dans le cas du recyclage, la cartouche vide décontaminée est remplie de résines échangeuses d'ions neuves.

De façon plus précise, la présente invention concerne un procédé de traitement de cartouches ioniques usagées constituées d'une structure métallique creuse, fermée en son extrémité inférieure par au moins un tamis filtrant et remplie de résines échangeuses d'ions, ces cartouches étant stockées dans une piscine de stockage des cartouches. Ce procédé, dans lequel on utilise une pluralité de piscines et un château spécifique de transfert équipé d'un couvercle et permettant de transporter une cartouche d'une piscine de déchargement vers une cellule de traitement, est caractérisé en ce qu'il consiste à effectuer les opérations suivantes :
a) transfert de la cartouche de la piscine de stockage vers une piscine de déchargement ;
b) mise en place de la cartouche à conditionner à l'intérieur du château de transfert ;
c) émersion et décontamination du château de transfert dans une cellule de décontamination ;
d) transfert du château vers la cellule de traitement ;
e) extraction, par des moyens d'aspiration, des résines contenues dans la cartouche.

Avantageusement, l'opération a) consiste à charger la cartouche à conditionner dans un panier de transfert en milieu immergé pour la transférer de la piscine de stockage vers la piscine de déchargement. Cette dernière piscine est conçue pour recevoir différents types de châteaux contenant des éléments combustibles et permettre leur déchargement.

L'opération (d) de transfert du château vers la cellule de traitement comprend une opération d'accostage.

De façon plus explicite, l'opération d'accostage consiste :
- à positionner de façon étanche le château respectivement sous la cellule de traitement ;
- à retirer le couvercle du château ; et
- à transférer ledit couvercle dans ladite cellule afin d'assurer une ouverture entre ledit château et ladite cellule.

Selon un mode de réalisation de l'invention, les moyens d'aspiration utilisés pour l'extraction des résines comportent un tuyau d'aspiration introduit, d'une part, dans la cartouche et relié, d'autre part, à une pompe pneumatique, elle-même reliée à une unité de stockage des résines usées.

Pour le conditionnement des cartouches, le procédé consiste en outre à effectuer, après extraction des résines, les opérations suivantes :
f) retrait de la cartouche hors du château et décontamination de la structure interne dans la cellule de traitement ;
g) dépose de la cartouche décontaminée dans un étui de conditionnement assurant le confinement de ladite cartouche ; et
h) dépose de l'étui dans un caisson de stockage.

L'opération de dépose de la cartouche dans l'étui comprend une opération d'accostage de l'étui sous la cellule de traitement qui consiste :
- à positionner de façon étanche l'étui respectivement sous la cellule de traitement (le château de transfert ayant été préalablement désaccosté) ;
- à retirer le couvercle de l'étui ; et
- à transférer ledit couvercle dans ladite cellule afin d'assurer une ouverture entre ledit étui et ladite cellule.

Avantageusement, le procédé comporte une dernière opération i) consistant à remplir de béton le caisson pour le stocker.

Selon un mode de réalisation de l'invention, le procédé comprend, après l'opération (f), la possibilité d'effectuer une opération de découpage de la cartouche afin de réduire son volume lors du conditionnement de ladite structure dans le caisson de stockage.

Pour le recyclage des cartouches, le procédé consiste en outre à effectuer, après extraction des résines, les opérations suivantes :
j) retrait de la cartouche vide hors du château et transfert de ladite cartouche dans la cellule de traitement ;
k) démontage du tamis filtrant et lavage dudit tamis ;
l) décontamination et nettoyage de la structure métallique interne de la cartouche sans son tamis ;
m) remontage du tamis filtrant sur la cartouche et remise en place de ladite cartouche dans le château de transfert ;
n) remplissage de la structure métallique de la cartouche par des résines échangeuses d'ions neuves.

De façon plus précise, le lavage du tamis filtrant consiste à transférer ledit tamis dans un bac à ultrasons où il est nettoyé.

Selon l'invention, le procédé comporte une dernière opération o) de transfert du château dans la piscine de déchargement permettant le transfert de la cartouche recyclée vers une piscine de stockage.

D'autres avantages et caractéristiques de la présente invention apparaîtront au cours de la description qui va suivre, donnée à titre illustratif, mais nullement limitatif, en référence aux dessins dans lesquels :
- la figure 1 est une représentation schématique d'une Nymphéa ionique ;
- la figure 2 est une représentation schématique des opérations d'accostage/désaccostage du château de transfert sous la cellule de traitement ; et
- la figure 3 est une représentation très schématique de la mise en caisson de l'étui contenant la cartouche vide décontaminée.

Dans la description qui va suivre, on s'attachera à décrire d'une part les différentes opérations effectuées depuis le stockage des cartouches dans la piscine de stockage jusqu'au bétonnage du caisson contenant l'étui et, par conséquent, la cartouche vide décontaminée, et d'autre part les différentes opérations effectuées depuis le stockage des cartouches usées dans la piscine de stockage jusqu'au retour des cartouches recyclées dans la même piscine de stockage.

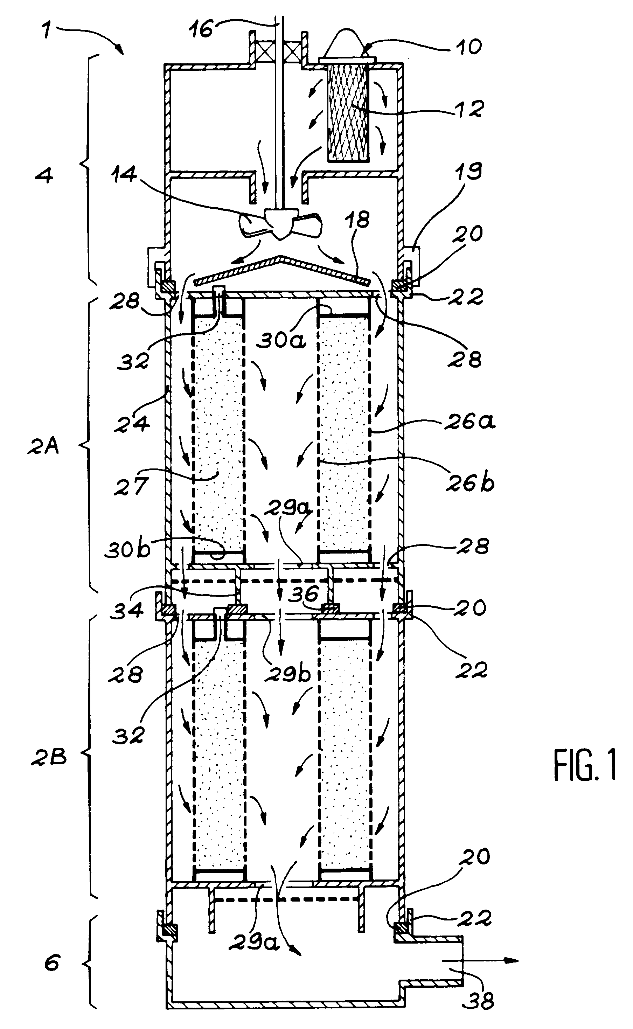

A des fins de compréhension des procédés selon l'invention, on a représenté sur la figure 1, une Nymphéa ionique avec ses deux cartouches Nymphéa, que l'on nommera plus simplement cartouches.

En effet, chaque Nymphéa 1 comporte deux cartouches 2A et 2B cylindriques et superposées l'une sur l'autre. Elle comporte, de plus, un ensemble d'aspiration 4 situé au-dessus de la cartouche haute 2A, et une boîte d'écoulement 6 disposée au-dessous de la cartouche basse 2B.

L'ensemble d'aspiration 4 comprend une ouverture 10 par laquelle l'eau contaminée s'introduit dans la Nymphéa, un ensemble de filtres 12 et une hélice 14 reliée par un arbre 16 à un moteur extérieur à la Nymphéa, et non représenté sur la figure. L'ensemble d'aspiration 4 comprend également un déflecteur 18 situé sous l'hélice 14.

L'ensemble d'aspiration 4 s'emboîte sur la cartouche haute grâce à des moyens 19 d'alignement de la cartouche 2A avec ledit ensemble d'aspiration 4. Des oreilles de préhension 22 des cartouches 2A et 2B assurent également l'alignement respectif de la cartouche 2A avec l'ensemble d'aspiration 4, et de la cartouche 2B avec la cartouche 2A. Ces oreilles de préhension 22 ont également, et essentiellement, pour rôle de permettre à un opérateur de saisir et de déplacer chacune des cartouches à l'aide d'un dispositif de manutention, rôle qui sera décrit plus en détail dans la suite de la description. Associés respectivement à chacune de ces oreilles de préhension 22, des joints 20 assurent l'étanchéité de l'ensemble de la Nymphéa par rapport à l'extérieur.

Les cartouches haute 2A et basse 2B sont similaires l'une de l'autre et comportent une calandre 24 et une structure de tôle perforée (ou structure métallique) 26a et 26b. Cette structure métallique comporte deux tôles perforées recouvertes de toiles métalliques 26a et 26b, circulaires et de tailles différentes, formant deux viroles perforées disposées l'une dans l'autre. Le volume, situé entre ces deux viroles 26a et 26b et formant une chambre de confinement, est rempli d'une résine adéquate à l'échange d'ions et connue de l'homme de l'art. Des couvercles bas et haut, référencés respectivement 30b et 30a, assurent le maintien de la résine à l'intérieur de la chambre de confinement formée par les deux viroles 26a et 26b.

Des ouvertures 28 circulaires assurent le passage de l'eau contaminée entre l'unité d'aspiration 4 et la cartouche 2A, et entre les deux cartouches 2A et 2B.

Chaque cartouche comprend, de plus, un bouchon 32 amovible, placé dans une ouverture du couvercle haut 30a. Ce bouchon permet, dans sa position de fermeture, d'assurer le confinement de la résine à l'intérieur de la chambre de confinement et, dans sa position d'ouverture, de permettre l'introduction d'une canne d'aspiration, non représentée sur la figure, mais décrite ultérieurement.

Des tamis filtrants 29a, positionnés dans les fonds des calandres des cartouches, et des ouvertures 29b dans la surface de la calandre de la cartouche basse 2B, assurent le passage de l'eau décontaminée à travers la Nymphéa.

Une paroi 34, associée à un joint 36, assure une séparation entre l'eau contaminée et l'eau décontaminée dans la partie intermédiaire entre les calandres 24 des cartouches 2A et 2B.

La boîte d'écoulement 6 est emboîtée sous la cartouche basse 2B par des moyens identiques à ceux assurant l'emboîtement de la cartouche basse 2B sur la cartouche haute 2A. Cette boîte d'écoulement 6 recueille les eaux décontaminées qui proviennent des cartouches 2A et 2B et qui pénètrent dans ladite boite 6 par le tamis filtrant 29a.

Des canalisations 38 assurent l'évacuation des eaux décontaminées vers la piscine de stockage des combustibles dans laquelle est placée la Nymphéa.

En effet, la Nymphéa ionique est placée dans la piscine de stockage des combustibles. Toute la partie de la Nymphéa représentée sur la figure 1 est immergée. Seul le moteur, alimentant l'ensemble d'aspiration 4 en énergie, est émergé.

L'eau contaminée s'introduit dans la Nymphéa par l'ouverture 10, grâce à l'ensemble arbre/hélice 16/14 permettant l'aspiration de l'eau dans la Nymphéa. Les filtres 12, à l'entrée de la Nymphéa, permettent de retenir les particules d'une certaine taille (par exemple : sensiblement supérieure à 100 micromètres). L'eau contaminée à traiter est alors orientée par le déflecteur 18 en périphérie de la cartouche haute 2A et traverse une première série d'ouvertures 28 ; le nombre de ces ouvertures est de vingt quatre selon la Nymphéa représentée.

Une partie de l'eau contaminée est évacuée en périphérie de la cartouche basse 2B tandis que l'autre partie traverse le lit de résine 27 de la cartouche haute 2A.

Les eaux traitées et donc décontaminées, sont évacuées par les tamis et ouvertures centrales 29a et 29b vers la boîte d'écoulement 6.

La partie des eaux évacuées vers la cartouche basse 2B traverse le lit de résine 27 de ladite cartouche 2B pour être évacuées, une fois traitées, vers la boîte d'écoulement 6.

Les eaux ainsi décontaminées peuvent être évacuées de ladite boîte 6 suivant plusieurs directions, lorsqu'il existe plusieurs canalisations 38, en l'occurrence trois canalisations (dont une seule est représentée) pour la Nymphéa décrite.

Aussi, les procédés selon l'invention consistent à conditionner ou à recycler ces cartouches 2A et 2B. Qu'il s'agisse de conditionnement ou de recyclage, lorsque lesdites cartouches 2A et 2B sont usées, elles sont retirées de la Nymphéa par l'opérateur et amenées dans une piscine de stockage des cartouches usées.

Dans la description qui va suivre, la première partie concernera la partie du traitement des cartouches qui est commune au procédé de recyclage et au procédé de conditionnement desdites cartouches. Seront ensuite décrites les étapes propres au procédé de conditionnement, puis les étapes propres au procédé de recyclage.

Ainsi, on va décrire, ci-dessous, les étapes nécessaires au traitement des cartouches, depuis la piscine de stockage des cartouches usées jusqu'au retrait des résines usées hors de la structure métallique de la cartouche.

Chaque cartouche est tout d'abord transférée de la piscine de stockage vers la piscine de déchargement par un panier-taxi. Ce panier-taxi permet de transporter sous eau une cartouche d'une piscine vers une autre piscine. Un château de transfert est stationné dans cette piscine de déchargement. La cartouche est alors transférée du panier-taxi dans la château de transfert.

Ce château de transfert, appelé plus simplement château, est utilisé pour transporter la cartouche de la piscine de déchargement vers la cellule de traitement, cette piscine et cette cellule n'ayant aucune ouverture commune qui permettrait de passer la cartouche de l'une à l'autre en la laissant constamment immergée car la cellule de traitement n'est pas sous eau. La cartouche doit donc être transportée par voie aérienne. Le château, qui permet le transfert par voie aérienne, a un premier rôle de confinement de la cartouche. De plus, il est équipé d'une épaisseur de plomb et rempli d'eau, ce qui assure la protection biologique des opérateurs après émersion.

Le transfert de la cartouche dans le château s'effectue grâce à un pont roulant sous lequel est accroché une perche. Cette perche s'encastre, par un système de préhension, dans le panier-taxi et assure sa conduite, sous eau, de la piscine de stockage vers la piscine de déchargement.

La cartouche est alors transférée dans le château en attente dans la piscine de déchargement. Un couvercle est placé, de façon étanche, sur le château, muni d'un palonnier, auquel est fixée une extrémité d'une perche. La seconde extrémité de la perche est émergée et peut être saisie et accrochée à un pont roulant. Sous l'action dudit pont roulant, le château est soulevé et sorti hors de l'eau légèrement contaminée de la piscine de déchargement.

Le château contenant la cartouche est alors transféré dans une cellule de décontamination où sa paroi externe est décontaminée afin de pouvoir être transféré sous la cellule de traitement, cette opération nécessitant son passage dans des zones qui ne doivent pas être contaminées.

Ainsi décontaminé, le château peut être transféré, puis accosté sous la cellule de traitement, à partir de laquelle sont extraites les résines hors de la cartouche. A la sortie de la cellule de décontamination, le château est déposé sur un chariot motorisé et transféré dans une cellule située sous la cellule de traitement. Une opération d'accostage du château est alors effectuée.

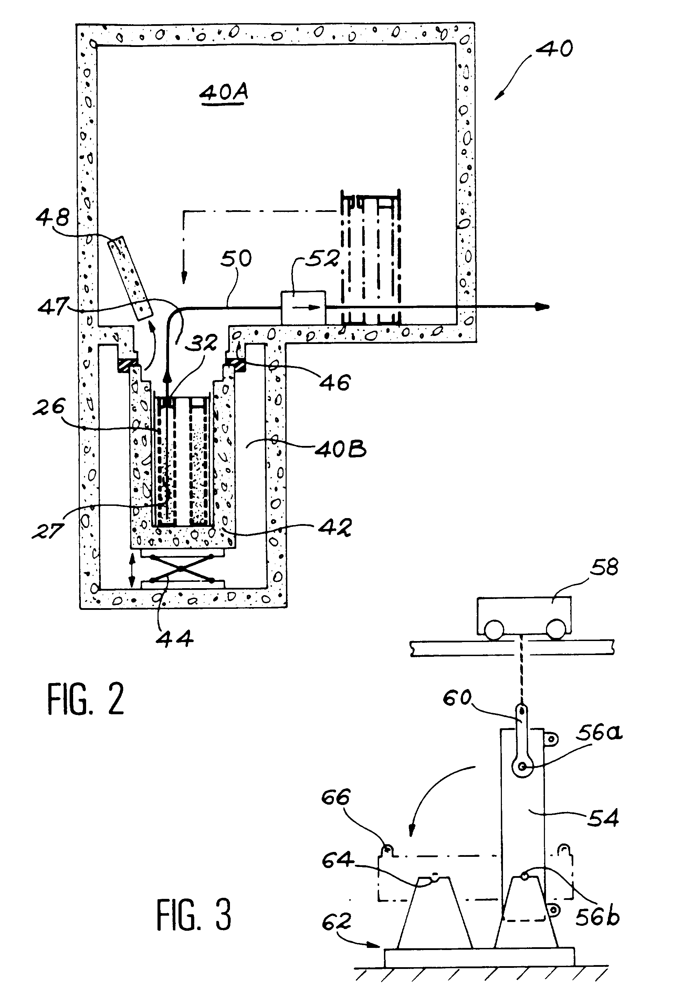

Cette opération d'accostage du château sous la cellule de traitement est représentée sur la figure 2.

De façon plus précise, la cellule de traitement 40 comprend une cellule de surface 40A et une sous-cellule 40B. Pour l'accostage, le château 42 est introduit dans la sous-cellule 40B, et positionné sur un tabouret 44 variable en hauteur. Ce tabouret permet l'accostage de plusieurs types de châteaux en ajustant la position du château 42 par rapport à l'ouverture 47 se trouvant dans le plancher de la cellule de surface 40A. Cette ouverture 47 est fermée (lorsqu'il n'y a pas d'accostage) par un couvercle de cellule non représenté sur la figure, par soucis de simplification de ladite figure.

Lorsque le château 42 est correctement positionné, une couronne 46 équipée d'un joint d'étanchéité, assure l'étanchéité entre la partie supérieure du château 42 et le plancher de la cellule de surface 40A. Le couvercle de cellule, puis le couvercle 48 du château sont retirés et transférés dans ladite cellule 40A. Il y a alors communication entre le château 42 et la cellule de surface 40A.

Le bouchon 32 de la cartouche est alors retiré pour permettre le passage d'une canne 50 d'aspiration reliée, par un tuyau souple, à une pompe 52 d'aspiration. Cette pompe 52, du type à air comprimé, assure l'aspiration, à travers la canne 50, de la résine contenue dans la cartouche. Cette résine ainsi extraite est évacuée vers une unité de stockage des résines, extérieure à la cellule d'intervention 40 et non représentée sur la figure.

Lorsque la résine a été extraite de la cartouche, la cartouche vide peut être soit conditionnée, soit recyclée. Dans les lignes de description qui vont suivre, on va décrire les étapes permettant de conditionner la cartouche vide.

Ainsi, lorsque la cartouche a été vidée de sa résine, celle-ci est alors sortie du château, au moyen d'un palonnier fixé sous un pont roulant, et décontaminée sous eau à haute pression dans un puits de la cellule de traitement 40 afin d'éliminer la totalité des résines actives. La cartouche vide est représentée hors du château, sur la figure 2, en traits mixtes, le puits de rinçage n'étant pas représenté par soucis de clarté de ladite figure.

Selon un mode de réalisation de l'invention, des moyens vidéo sont disposés dans la cellule 40 pour permettre un examen visuel de l'état de pureté de la structure interne 26 de la cartouche.

Le désaccostage du château peut alors être effectué ainsi que son retour vers la piscine de déchargement où une autre cartouche sera introduite dans ledit château.

L'opération de désaccostage correspond à l'opération inverse de l'accostage, à savoir : replacement du couvercle 48 sur le château 42, replacement du couvercle de cellule sur l'ouverture 47 et retrait du château 42 de sous le plancher de la cellule de surface 40A. Le château 42 est alors transféré à nouveau par chariot motorisé vers la piscine de déchargement où l'on procède à la mise en château d'une autre cartouche.

La sous-cellule 40B étant libre, il est alors possible de procéder à l'accostage de l'étui de conditionnement amené par le chariot motorisé. Cette opération d'accostage de l'étui est similaire à celle décrite pour le château avec le positionnement de l'étui sous la cellule de surface 40A, son étanchement, et le retrait des couvercles.

Le rôle de cet étui de conditionnement est d'assurer le confinement de la cartouche vide décontaminée à sa sortie de la cellule d'intervention 40.

Lorsque l'étui a accosté, la cartouche vidée de sa résine, est introduite dans l'étui. On peut alors procéder au désaccostage dudit étui qui est transféré dans un caisson métallique.

Sur la figure 3, on a représenté l'opération de transfert de l'étui dans le caisson.

En effet, après désaccostage, l'étui 54 est en position verticale. Des tourillons 56a et 56b, respectivement en partie haute et en partie basse de l'étui 54, permettent sa préhension et son basculement en position horizontale. De façon plus précise, l'étui 54 est soulevé à l'aide d'un pont roulant sous lequel est pendu un palonnier 60, lui-même placé sur des tourillons hauts 56a. L'étui 54, ainsi soulevé est placé de façon à ce que ses tourillons bas 56b s'emboîtent dans les encoches 64 d'un berceau 62 qui permet la rotation de l'étui 54 et sa mise en position horizontale.

Lorsque l'étui 54 est en position horizontale, des élingues de manutention (non représentées sur la figure) permettent d'accrocher les anneaux 66 de levage de l'étui pour le transporter dans le caisson.

Le caisson peut alors être bétonné, c'est-à-dire que le volume compris entre la face externe de l'étui et la face interne du caisson peut être remplie de béton.

Ainsi bétonné, le caisson pourra être stocké sans risque de contamination du milieu extérieur.

Selon un autre mode de réalisation de l'invention, la cartouche vidée de sa résine peut être introduite dans un atelier de démantèlement pour être découpée. De cette façon, son volume est largement diminué, ce qui permet l'utilisation d'étuis, et donc de caissons, de tailles réduites et ainsi, le volume du déchet à stocker se trouve diminué.

Le procédé de recyclage des cartouches comprend toutes les opérations, déjà décrites, jusqu'à l'opération d'extraction des résines. Ce procédé de recyclage consiste, lorsque la structure métallique a été vidée de toute résine, à nettoyer ladite structure et à la remplir de résines neuves.

Le nettoyage de la structure métallique consiste à nettoyer, d'une part, les toiles métalliques et, d'autre part, les tamis filtrants.

Selon un mode de réalisation de l'invention, les tamis filtrants sont réalisés de façon à être démontables afin de faciliter leur nettoyage lors du recyclage des cartouches.

Aussi, la cartouche vide est extraite du château de transfert accosté sous la cellule de traitement au moyen du palonnier et du pont roulant de ladite cellule. Elle est alors transférée vers une boîte à gants de cette cellule.

On appelle boîte à gants, une cellule à partir de laquelle les opérateurs peuvent effectuer des opérations manuelles sans qu'il y ait rupture du confinement existant dans le château et la cellule de traitement.

La partie inférieure de la cartouche vide est placée dans cette boîte à gants où un opérateur démonte manuellement le (ou les) tamis filtrant(s) de ladite cartouche. Les tamis filtrants sont alors plongés dans une cuve à ultrasons où ils sont décolmatés, c'est-à-dire nettoyés de toutes impuretés.

Parallèlement au décolmatage des tamis filtrants, la cartouche vide est transférée dans un puits de rinçage de la cellule de traitement où elle est nettoyée avec de l'eau à haute pression.

Les tamis filtrants propres sont ensuite remontés sur la cartouche nettoyée, qui a été retransférée dans la boîte à gants pour permettre le remontage desdits tamis.

La cartouche vide reconstituée (c'est-à-dire propre et remontée), est replacée, au moyen des palonnier et pont roulant de la cellule de traitement, dans le château accosté sous ladite cellule.

L'opération de remplissage de la structure métallique par des résines neuves peut alors être effectué à partir d'une cuve de préparation, placée à l'extérieur de la cellule d'intervention et contenant les résines échangeuses d'ions neuves. Lorsque la structure est pleine, de nouveaux bouchons sont placés, par télémanipulation, sur le couvercle haut de la cartouche.

Selon un mode de réalisation de l'invention, les résines neuves contenues dans la cuve de préparation sont mélangées avec de l'eau désilicée (c'est-à-dire l'eau dont la silice a été éliminée) afin de permettre un écoulement plus facile de ladite résine dans la tuyauterie utilisée pour le remplissage de la cartouche. Durant le remplissage de ladite cartouche, l'eau désilicée est pompée dans le château afin de maintenir un niveau d'eau constant dans ledit château.

Ainsi, lorsque la cartouche est prête a être réemployée, le château est désaccosté et transféré vers la piscine de déchargement où la cartouche est extraite dudit château et transférée dans la piscine de stockage des cartouches par panier-taxi.

La cartouche recyclée est stockée en attendant d'être réutilisée.

Aussi, selon ce procédé de recyclage, seules les résines usagées devront être stockées, ce qui assure un gain du volume de stockage des déchets considérable, ainsi qu'une économie importante puisque les cartouches vides sont réutilisées.

## Revendications

1. Procédé de traitement de cartouches (2A,2B) ioniques usagées stockées dans une piscine de stockage des cartouches, et constituées d'une structure métallique interne creuse (26A, 26B), fermée en son extrémité inférieure par au moins un tamis filtrant (29a) et remplie de résines échangeuses d'ions (27), procédé dans lequel on utilise une pluralité de piscines et au moins un château de transfert (42) équipé d'un couvercle (48) et permettant de transporter une cartouche d'une piscine vers une cellule (40), caractérisé en ce qu'il consiste à effectuer les opérations suivantes :
a) transfert de la cartouche de la piscine de stockage vers une piscine de déchargement ;
b) mise en place de la cartouche à conditionner à l'intérieur du château de transfert ;
c) décontamination du château de transfert dans une cellule de décontamination ;
d) transfert du château vers une cellule (40) de traitement ;
e) extraction, par des moyens d'aspiration (52), des résines échangeuses d'ions contenues dans la cartouche.

2. Procédé selon la revendication 1, caractérisé en ce que l'opération a) consiste à charger la cartouche à conditionner dans un panier de transfert en milieu immergé pour la transférer de la piscine de stockage vers la piscine de déchargement.

3. Procédé selon l'une quelconque des revendications 1 et 2, caractérisé en ce que le transfert du château vers la cellule de traitement comprend une opération d'accostage du château sous ladite cellule de traitement.

4. Procédé selon la revendication 3, caractérisé en ce que l'opération d'accostage consiste :
- à positionner de façon étanche le château sous la cellule de traitement ;
- à retirer le couvercle du château ; et
- à transférer ledit couvercle dans ladite cellule afin d'assurer une ouverture entre ledit château et ladite cellule.

5. Procédé selon l'une quelconque des revendications 1 à 4, caractérisé en ce que les moyens d'aspiration utilisés pour l'extraction des résines échangeuses d'ions comportent un tuyau d'aspiration introduit, d'une part, dans la cartouche et relié, d'autre part, à une pompe pneumatique, elle-même reliée à une unité de stockage des résines.

6. Procédé selon l'une quelconque des revendications 1 à 5, caractérisé en ce qu'il consiste en outre à effectuer, après extraction des résines échangeuses d'ions, les opérations suivantes pour le conditionnement des cartouches vidées :
f) retrait de la cartouche vidée hors du château et décontamination de la structure métallique interne de la cartouche ;
g) dépose de la cartouche vidée décontaminée dans un étui de conditionnement assurant le confinement de ladite cartouche ; et
h) dépose de l'étui dans un caisson de stockage.

7. Procédé selon la revendication 6, caractérisé en ce que la dépose de la cartouche dans l'étui comprend une opération d'accostage de l'étui sous la cellule de traitement.

8. Procédé selon la revendication 7, caractérisé en ce que l'opération d'accostage consiste :
- à positionner de façon étanche l'étui sous la cellule de traitement ;
- à retirer le couvercle de l'étui ; et
- à transférer ledit couvercle dans ladite cellule afin d'assurer une ouverture entre ledit étui et ladite cellule.

9. Procédé selon l'une quelconque des revendications 6 à 8, caractérisé en ce qu'il comporte une dernière opération i) consistant à remplir de béton le caisson pour le stocker.

10. Procédé selon l'une quelconque des revendications 6 à 9, caractérisé en ce qu'il comprend, après l'opération f), une opération de découpage de la structure métallique afin de réduire son volume lors du conditionnement de ladite structure dans le caisson de stockage.

11. Procédé selon l'une quelconque des revendications 1 à 5, caractérisé en ce qu'il consiste en outre à effectuer, après extraction des résines échangeuses d'ions, les opérations suivantes pour le recyclage des cartouches vidées :
j) retrait de la cartouche vidée hors du château et transfert de ladite cartouche dans la cellule de traitement ;
k) démontage du tamis filtrant et lavage dudit tamis ;
l) décontamination et nettoyage de la structure métallique interne de la cartouche sans son tamis ;
m) remontage du tamis filtrant sur la cartouche vidée et remise en place de ladite cartouche dans le château de transfert ;
n) remplissage de la structure métallique interne de la cartouche des résines échangeuses d'ions neuves.

12. Procédé selon la revendication 11, caractérisé en ce que le lavage du tamis filtrant consiste à transférer ledit tamis dans une cuve à ultrasons où il est nettoyé.

13. Procédé selon l'une quelconque des revendications 11 et 12, caractérisé en ce qu'il comporte une dernière opération o) de transfert du château dans une piscine de déchargement où la cartouche est extraite dudit château et transférée dans la piscine de stockage des cartouches par panier-taxi.

## Claims

1. Process for the treatment of used ion cartridges (2A, 2B), stored in a cartridge storage pool and constituted by a hollow internal metal structure (26A, 26B), sealed at its lower end by at least one filter screen (29a) and filled with ion exchange resins (27), use being made of a plurality of pools and at least one transfer casket (42 equipped with a cover (48) and making it possible to transport a cartridge from a pool to a cell (40), characterized in that it consists of performing the following operations:
a) transfer of the cartridge from the storage pool to the discharge pool.
b) placing the cartridge to be conditioned within the transfer casket.
c) decontamination of the transfer casket in a decontamination cell.
d) transfer of the casket to a treatment cell (40) and
e) extraction by suction means (52) of the ion exchange resins contained in the cartridge.

2. Process according to claim 1, characterized in that the operation a) consists of loading the cartridge to be conditioned into a transfer basket in an immersed medium for the transfer thereof from the storage pool to the discharge pool.

3. Process according to either of the claims 1 and 2, characterized in that the transfer of the casket to the treatment cell comprises an operation of engaging the casket beneath said treatment cell.

4. Process according to claim 3, characterized in that the engagement operation consists of tightly positioning the casket beneath the treatment cell, removing the cover from the casket and transferring said cover into said cell in order to ensure an opening between the casket and the cell.

5. Process according to any one of the claims 1 to 4, characterized in that the suction means used for the extraction of the ion exchange resins have a suction pipe introduced on the one hand into the cartridge and connected on the other to a pneumatic pump, which is itself connected to a resin storage unit.

6. Process according to any one of the claims 1 to 5, characterized in that it also consists of carrying out, following the extraction of the ion exchange resins, the following operations for the conditioning of the empty cartridges:
f) removal of the empty cartridge from the casket and decontamination of the internal metal structure of the cartridge.
g) deposition of the decontaminated empty cartridge in a conditioning case ensuring the confinement of said cartridge and
h) deposition of the case in a storage container.

7. Process according to claim 6, characterized in that the deposition of the cartridge in the case comprises an operation of engaging the case beneath the treatment cell.

8. Process according to claim 7, characterized in that the engagement operation consists of tightly positioning the case beneath the treatment cell, removing the cover from the case and transferring said cover into said cell in order to ensure an opening between said case and said cell.

9. Process according to any one of the claims 6 to 8, characterized in that it involves a final operation i) consisting of filling the container with concrete for the storage thereof.

10. Process according to any one of the claims 6 to 9, characterized in that it comprises, following the operation f), an operation of cutting up the metal structure in order to reduce its volume during the conditioning of said structure in the storage container.

11. Process according to any one of the claims 1 to 5, characterized in that it also consists of carrying out, following the extraction of the ion exchange resins, of the following operations for recycling the empty cartridges:
j) removal of the empty cartridge from the casket and transfer of said cartridge into the treatment cell.
k) disassembly of the filter screen and washing the latter.
l) decontamination and cleaning of the internal metal structure of the cartridge without its screen.
m) refitting the filter screen to the empty cartridge and putting back said cartridge in place in the transfer casket and
n) filling the internal metal structure of the cartridge with new ion exchange resins.

12. Process according to claim 11, characterized in that the washing of the filter screen consists of transferring said screen into an ultrasonic tank, where it is cleaned.

13. Process according to either of the claims 11 and 12, characterized in that it involves a final operation o) of transferring the casket into a discharge pool, where the cartridge is extracted from said casket and transferred into the cartridge storage pool by a special vehicle.

## Patentansprüche

1. Verfahren zur Behandlung von gebrauchten ionischen Kartuschen (2A, 2B), die in einem Kartuschenlagerbad gelagert sind und die aus einer hohlen, inneren metallischen Konstruktion (26A, 26B) bestehen, die an ihrem unteren Ende durch mindestens ein Filtersieb (29a) verschlossen ist und mit Ionenaustauschharzen (27) gefüllt ist, ein Verfahren, bei dem mehrere Bäder venvendet werden und mindestens ein Transportbehälter (42), der mit einem Deckel (48) versehen ist und den Transport einer Kartusche aus dem Bad in eine Zelle (40) ermöglicht, dadurch gekennzeichnet, daß das Verfahren aus folgenden Arbeitsgängen besteht:
a) Transport der Kartusche aus dem Lagerbad in ein Entladebad;
b) Einsetzen der zu behandelnden Kartusche in den Transportbehälter:
c) Dekontamination des Transportbehälters in einer Dekontaminationszelle;
d) Transport des Behälters in eine Behandlungszelle (40);
e) Extraktion der in der Kartusche enthaltenen Ionenaustauscherharze mit Hilfe von Saugvorrichtungen (52).

2. Verfahren nach Anspruch 1, dadurch gekennzeichnet, daß der Arbeitsgang a) darin besteht, die zu behandelnde Kartusche in einen Transportkorb in eingetauchtem Medium verladen wird, um sie vom Lagerbad in das Entladebad zu transportieren.

3. Verfahren nach einem beliebigen der Ansprüche 1 und 2, dadurch gekennzeichnet, daß der Transport des Behälters zur Behandlungszelle einen Arbeitsgang umfaßt, bei dem der Behälter unter der genannten Behandlungszelle angelegt wird.

4. Verfahren nach Anspruch 3, dadurch gekennzeichnet, daß der Anlegearbeitsgang aus folgenden Etappen besteht:
- Positionierung des Behälters unter der Behandlungszelle, wobei die Verbindung vollkommen abgedichtet sein muß;
- Herausziehen des Deckels aus dem Behälter; und
- Transport des genannten Deckels in die genannte Zelle, um eine Öffnung zwischen dem genannten Behälter und der genannten Zelle zu schaffen.

5. Verfahren nach einem beliebigen der Ansprüche 1 bis 4, dadurch gekennzeichnet, daß die für die Extraktion der Ionenaustauscherharze verwendeten Ansaugvorrichtungen ein Ansaugrohr enthalten, das auf der einen Seite in die Kartusche eingeführt und auf der anderen Seite an eine Pneumatikpumpe angeschlossen wird, welche wiederum mit einer Harzlagereinheit verbunden ist.

6. Verfahren nach einem beliebigen der Ansprüche 1 bis 5, dadurch gekennzeichnet, daß es unter anderem darin besteht, daß nach der Extraktion der Ionenaustauscherharze folgende Arbeitsgänge zur Behandlung der ausgeleerten Kartuschen durchgeführt werden:
f) Herausholen der ausgeleerten Kartusche aus dem Behälter und Dekontaminierung der inneren Metallkonstruktion der Kartusche;
g) Ablegen der ausgeleerten, dekontaminierten Kartusche in einem Behandlungsbehälter unter Gewährleistung des Verschlusses der genannten Kartusche; und
h) Ablegen dieses Behälters in einen Lagerkasten.

7. Verfahren nach Anspruch 6, dadurch gekennzeichnet, daß das Ablegen der Kartusche in dem Behälter einen Arbeitsschritt umfaßt, bei dem der Behälter unter der Behandlungszelle angelegt werden muß.

8. Verfahren nach Anspruch 7, dadurch gekennzeichnet, daß der Anlegearbeitsgang aus folgenden Etappen besteht:
- Positionierung des Behälters unter der Behandlungszelle, wobei die Verbindung vollkommen abgedichtet sein muß;
- Herausziehen des Deckels aus dem Behälter; und
- Transport des genannten Deckels in die genannte Zelle, um eine Öffnung zwischen dem genannten Behälter und der genannten Zelle zu schaffen.

9. Verfahren nach einem beliebigen der Ansprüche 6 bis 8, dadurch gekennzeichnet, daß es einen letzten Arbeitsgang i) umfaßt, der darin besteht, den Lagerkasten mit Beton zu füllen.

10. Verfahren nach einem beliebigen der Ansprüche 6 bis 9, dadurch gekennzeichnet, daß nach dem Arbeitsgang f) ein Arbeitsgang folgt, bei dem die Metallkonstruktion zerschnitten wird, um deren Volumen bei der Behandlung der genannten Konstruktion in dem Lagerkasten zu verringern.

11. Verfahren nach einem beliebigen der Ansprüche 1 bis 5, dadurch gekennzeichnet, daß es unter anderem darin besteht, daß nach der Extraktion der Ionenaustauscherharze folgende Arbeitsgänge zur Wiederaufbereitung der ausgeleerten Kartuschen durchgeführt werden:
j) Herausziehen der ausgeleerten Kartusche aus dem Behälter und Transport der genannten Kartusche in die Behandlungszelle;
k) Ausbau des Filtersiebes und Waschen des genannten Siebes;
l) Dekontamination und Reinigung der inneren Metallkonstruktion der Kartusche ohne deren Sieb;
m) Wiederanbau des Filtersiebes an die ausgeleerte Kartusche und Wiedereinsetzen der genannten Kartusche in den Transportbehälter;
n) Füllung der inneren Metallkonstruktion der Kartusche mit neuen Ionenaustauscherharzen.

12. Verfahren nach Anspruch 11, dadurch gekennzeichnet, daß der Waschvorgang für das Filtersieb, darin besteht, daß das genannte Sieb in einen Ultraschallbehälter transportiert wird, in dem die Reinigung stattfindet.

13. Verfahren nach einem beliebigen der Ansprüche 11 und 12, dadurch gekennzeichnet, daß es einen letzten Arbeitsgang o) umfaßt, bei dem der Behälter in das Entladebad transportiert wird, wo die Kartusche aus dem genannten Behälter herausgenommen und durch einen Korbförderer in das Kartuschenlagerbad transportiert wird.
